# EUROPEAN PATENT SPECIFICATION

(11) **EP 2 922 383 B1**
(45) Date of publication and mention of the grant of the patent: **04.01.2017**
(21) Application number: 13798919.0
(22) Date of filing: 22.11.2013
(51) Int. Cl.: A01B 39/24, A01B 15/20

(54) **INTER-ROW CULTIVATOR**
ZWISCHENREIHENGRUBBER
DISPOSITIF DE CULTURE ENTRE RANGÉES

(30) Priority: 26.11.2012 DK 201270734
(43) Date of publication of application: 30.09.2015
(73) Proprietor: THYREGOD A/S, 7323 Give (DK)
(72) Inventor: JENSEN, Claus Harrild, Drantum 7330 Brande (DK)
(74) Representative: Patentgruppen
(86) International application number: PCT/DK2013/050397
(87) International publication number: WO 2014/079463

(56) References cited:
- DE-C1- 3 901 993
- FR-A1- 2 394 972
- US-A- 3 921 726

## Description

### Field of the invention

The invention relates an inter-row cultivator.

### Background of the invention

Different inter-row cultivators are known in the art. One example is disclosed in the American patent US 3,921,726, where a number of cultivator gangs are supported on a lateral tool-supporting beam by an upper and a lower pivotally connected link.

### Brief description of the invention

Known inter-row cultivators may be unsuitable for efficient utilization of e.g. non-rectangular fields and for use with skewed headlands or skewed crop rows.

It is therefore an object of the invention to increase the efficiency of the inter-row cultivator, e.g. when used on fields with skewed headlands and when moving over rows of crops having a direction, which is non-orthogonal and non-parallel to the direction of movement of the inter-row cultivator.

The relates to an inter-row cultivator comprising
at least one tool bar and
a two or more of tool sections each being suspended on said at least one tool bar by an individual suspension arrangement,
each tool section comprising one or more ground tools,
the suspension arrangement comprising
an upper pivot link being pivotally connected to the tool bar at a first upper pivotal joint and pivotally connected to the tool section at a second upper pivotal joint and
a lower pivot link being pivotally connected to the tool bar at a first lower pivotal point and pivotally connected to the tool section at a second lower pivotal joint,
wherein one of said upper and said lower pivot links comprises an actuator arrangement for changing the distance between said first pivotal joint and said second pivotal joint of said pivotal link comprising said actuator arrangement.

One advantage of the invention may be that the by changing the distance of said pivot link comprising said actuator arrangement, the tool sections can each be moved between a ground-engaging and a raised position. By controlling the actuator arrangements of the suspension arrangements individually, the tool sections can be controlled and moved individually. This advantage may be obtained while at the same time having two mutually displaced pivot links, namely the upper and lower pivot links, which facilitates a flexibility of the tool section, mainly for moving up and down, i.e. vertical flexibility. Thereby a flexible inter-row cultivator may be achieved having both vertical flexibility and individual control of the tool sections. The individual control of the tool sections may be especially advantageous when the inter-row cultivator moves from a field zone with crop rows that are parallel to the direction of movement of the inter-row cultivator to a field zone with skewed crop rows which are neither parallel nor orthogonal to the direction of movement. Here the individual tool sections may be lifted from the ground right before they enter the skewed crop row zone. As the individual tool sections enters the skewed crop zone at different points of time the individual control allows the tool sections to stay in the ground-engaging position right until they enter this skewed crop row zone.

Another advantage of the invention may be that the actuator arrangement may be installed subsequently, e.g. by replacing one of the upper and lower pivot links with a pivot link comprising an actuator arrangement, such as e.g. a pivot cylinder or other actuator arrangements.

In the present context it is to be understood that said upper and lower pivot links are mutually displaced. In the present context it is to be understood that a ground tool may be any tool for cultivating or similarly processing the ground. Various examples of ground tools may comprise cultivation tools or other tools for engaging, cultivating or otherwise working the ground, e.g. by cutting and disrupting the growth of unwanted weed plants.

The efficiency of the inter-row cultivator according to the invention, e.g. when used on fields with skewed headlands and when moving over rows of crops having a direction, which is non-orthogonal and non-parallel to the direction of movement of the inter-row cultivator, may thereby be increased.

According to an embodiment of the invention, each of the suspension arrangements furthermore comprises a guiding pivot link being pivotally connected to the tool bar at a first guiding link pivotal joint and pivotally connected to the tool section at a second guiding link pivotal joint.

An advantage of the above embedment may be that the guiding pivot link forces or guides the movement of the tool section upwards when the actuator arrangement changes the length of its corresponding pivot link. Thereby, the upwards movement of the tool section from a ground-engaging position to a raised position is made more efficient by the guiding pivot link, e.g. due to elimination of a degree of freedom of movement of the tool section, this elimination being effective for at least a part of the movement of the tool section from the ground-engaging position to the raised position.

According to an alternative embodiment of the invention, the suspension arrangement comprises a guiding arrangement for guiding the movement of the tool section, when the actuator arrangement changes the length of the pivot link comprising the actuator arrangement. Such guiding arrangement may e.g. comprise a wedge or wedge arrangement, preferably connected to the actuator arrangement. In other alternative embodiments the guiding arrangement may comprise a wire arrangement connected to the actuator arrangement. For example in embodiments where the actuator arrangement is on the lower pivot joint, and the actuator arrangement increases the length of the lower pivot joint to move the tool section upwards, the guiding arrangement such as e.g. the wedge arrangement or the string arrangement forces the tool section upwards when the actuator arrangement increases its length.

According to an embodiment of the invention, the guiding pivot link is formed by a wire, such as a steel wire.

An advantage of the above embodiment may be that said wire is flexible to bend but has a fixed non-flexible length. Therefore, the guiding pivot link does not pose any restrictions on the distance between the first and second guiding link pivotal joints when this distance is below a certain length, which is the length of the wire. Therefore, the position of the tool section is in advantageous embodiments controlled exclusively by the upper and lower pivotal joints. This gives a degree of freedom for substantially vertical movement of the tool section, which can thereby adapt its vertical position to the ground level, which may typically move up and down as the inter-row cultivator moves over the ground. However, when the wire is stretched to its maximum length it will remove the degree of freedom of movement from the suspension arrangement and cause the tool section to pivot upwards. Therefore, the bendable and non-stretchable guiding pivot link formed by the wire facilitates both the advantage of some vertical flexibility of the tool section when this is in ground-engaging position and the upwards pivotal movement of the tool section into the raised position when the actuator arrangement changes the length of the pivot link which comprises the actuator arrangement.

According to an embodiment of the invention, the guiding pivot link is bendable. An advantage of the guiding pivot link being bendable is that guiding pivot link may only restrict the movement of the tool section when this is in a straightened configuration, while posing no restrictions on the movement of the tool sections when in a bent position.

According to an embodiment of the invention, the guiding pivot link is non-parallel to the lower pivot link when the tool section is in a raised position.

Alternatively, the guiding pivot link may be non-parallel to the upper pivot link, or non-parallel both the upper and lower pivot links. Preferably, and especially in connection with embodiments where the guiding pivot link is formed by a wire, the guiding pivot link is non-parallel to the upper and/or lower pivot link when the respective tool section is in a raised position. The essential is that the non-parallel orientation is defined for the configuration where the wire is extended, i.e. non-bended, such that the non-parallelism can be reasonably defined.

According to an embodiment of the invention, the guiding pivot link is orientated with an angle relative to the lower pivot link, said angle being between 2° and 45°, such as between 4° and 30°, such as between 6° and 15°, such as between 7° and 10°.

Alternatively, the guiding pivot link may be orientated with an angle relative to the upper pivot link, said angle being between 2° and 45°, such as between 4° and 30°, such as between 6° and 15°, such as between 7° and 10°.

According to an embodiment of the invention, the length of said guiding pivot link is greater than the length of the upper and lower pivot links.

An advantage of the above embodiment may be that the guiding pivot link may e.g. be oriented with an angle of e.g. 2-45° with respect to the upper pivot link when the tool section is in a raised position and/or when it is in a ground-engaging position. This may limit the degrees of freedom of movement of the tool section, at least in some positions, e.g. in embodiments where the guiding pivot link is formed by a wire, the position of the tool section for a given position of the actuator arrangement is determined by the wire when this wire is in a straightened configuration.

According to an embodiment of the invention, the tool bar comprises a control arrangement for controlling the actuator arrangements individually.

By controlling the actuator arrangement of each suspension arrangement individually, each tool section may be moved between a ground-engaging and a raised position independently of the position of the other tool sections. This may be a particular advantage e.g. when the inter-row cultivator is used on non-rectangular fields, and when moving into headlands with a non-perpendicular crop rows with respect to the direction of movement of the inter-row cultivator.

According to an embodiment of the invention, said upper and lower pivot links are parallel when the tool section is in a ground-engaging position.

An advantage of the above embodiment may be that the tool sections have at least some flexibility for movement, mainly in a vertical direction, thereby adapting the vertical position of the tool sections to the ground level during operation of the inter-row cultivator.

According to an embodiment of the invention, said upper pivotal link has the same length as said lower pivot link when said tool section are in a ground engaging position.

An advantage of the above embodiment may be that the tool sections have at least some flexibility for movement, mainly in a vertical direction, thereby adapting the vertical position of the tool sections to the ground level during operation of the inter-row cultivator.

According to an embodiment of the invention, the lower pivot link comprises said actuator arrangement.

Thereby, when the actuator arrangement is in a compressed or shortened configuration the tool section may be in a ground-engaging position and when the actuator expands the length of the lower pivot link, the corresponding tool section may move upwards towards a raised position.

In an alternative embodiment, the upper pivot link may comprise said actuator arrangement. Then, when the actuator arrangement is in a compressed or shortened configuration the tool section may be in a raised position and when the actuator expands the length of the lower pivot link, the corresponding tool section may move downwards towards the ground-engaging position.

According to an embodiment of the invention, the guiding pivot link and the lower pivot link are connected to a common pivot point on the tool section.

An advantage of the above embodiment may be that said guiding pivot link and said lower pivot link are pivotally connected to the tool section by only a single pivot point.

According to an embodiment of the invention, the guiding pivot link is connected to the tool bar between the connection points of the upper and lower pivot links on the tool bar.

According to an embodiment of the invention, each suspension arrangement is adapted to individually move the suspended tool section between a ground-engaging position and a raised position, said ground tools being lowered into said ground-engaging position, and said ground tool being raised from the ground in the raised position.

In the context of the present embodiment, it is to be understood that a given suspension arrangement is adapted to move the suspended tool section, i.e. the tool section which is suspended by said given suspension arrangement, between the ground-engaging and raised positions. As a result of this, said given suspension arrangement may move between said ground-engaging and raised positions individually from the other suspension arrangements, i.e. whether other suspension arrangements are moving their respective tool sections or not.

According to an embodiment of the invention, wherein the inter-row cultivator comprises a hitch arrangement for connecting the inter-row cultivator to a vehicle, such as a tractor.

According to an embodiment of the invention, wherein said actuator arrangement comprises a cylinder, such as a hydraulic cylinder.

According to an embodiment of the invention, wherein each tool section comprises a wheel for being in contact with the ground in the first position.

### Figures

The invention will be described in the following with reference to the figures in which
fig. 1 illustrates a part of an inter-row cultivator according to an embedment of the invention,
fig. 2 illustrates a part of an inter-row cultivator according to an embedment of the invention,
fig. 3 illustrates a part of an inter-row cultivator according to an embedment of the invention,
fig. 4 illustrates a part of an inter-row cultivator according to an embedment of the invention,
fig. 5 illustrates tool sections and their suspension arrangements according to an embedment of the invention,
fig. 6 illustrates tool sections and their suspension arrangements according to an embedment of the invention,
fig. 7 illustrates a tool section and its suspension arrangement according to an embedment of the invention, and
fig. 8 illustrates a tool section and its suspension arrangement according to an embedment of the invention.

### Detailed description

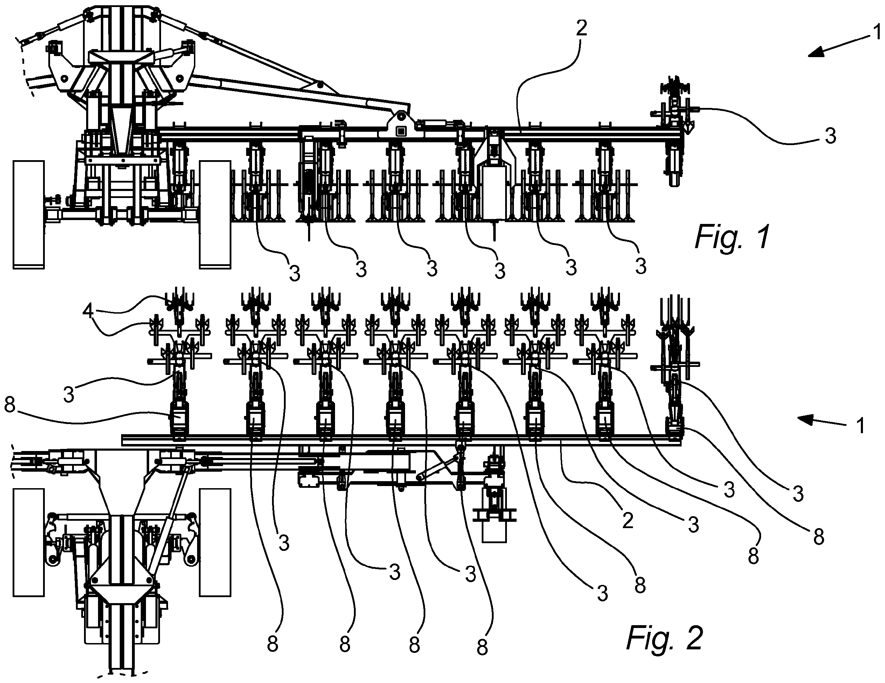

Referring to figure 1, an inter-row cultivator 1 according to an embodiment of the invention is illustrated in a side view. The inter-row cultivator 1 comprises a tool bar 2 and seven tool sections 3. As shown in figure 1, six of the tool sections 3 are in a ground-engaging position 23, while one of the tool sections 3, namely the outermost tool section 3, is in a raised position 24. This illustrates how the inter-row cultivator 1 can individually control the tool sections 3.

One advantage of the inter-row cultivator according to various embodiments may be described in relation to the following example. It is common in agricultural use of a field to have a so-called headland on two opposite ends of the field, typically the shorter ends. This headland is used for tractors with agricultural machines and harvesters for turning. For example, such headlands may typically be harvested first in order to minimize crop destruction by the harvester when it later uses the headlands for turning. However, fields, which are non-rectangular in shape, such as trapezoid or right-angled trapezoid shaped fields, where one of the longer sides is not at right angle with the ends, may pose a problem for efficient agricultural utilization with an inter-row cultivator. Either the inter-row cultivator must move completely out of the field for complete cultivation along this skewed side, or another headland-like area or skewed headland can be used for the tractor with the inter-row cultivator to turn in. Therefore, in such skewed headland, the crops, such as e.g. turnips, may typically be sowed in skewed rows, i.e. lines that are non-parallel to the crop rows of the rest of the field, i.e. both the main part of the field and the regular headlands. However, if the area adjacent to this skewed headland is to be effective cultivated a part of the inter-row cultivator 1 will have to cross the skewed lines of crops in the skewed headland, thereby potentially destroying such crops. This is because the different tool sections will meet the skewed headland with the skewed crop rows at different points of time. However, by means of the inter-row cultivator 1 according to the above embodiment of the invention, the individual tool sections 3 of the inter-row cultivator 1 may be raised from the ground-engaging position 23 to a raised position 24 as they enter the skewed headland, while other tool sections 3, which have not yet entered the skewed headland, may stay in the ground-engaging position 23. Thereby, the effectiveness of the agricultural use of fields may be increased, especially for fields with odd symmetry, such as non-rectangular fields.

Referring to figure 2, an inter-row cultivator 1 according to an embodiment of the invention is illustrated in a top-down view. As it can be seen on figure 2, each tool section 3 is suspended on the tool bar 2 by an individual suspension arrangement 8. As can also be seen, the outermost tool section 3 is in a raised position 24, as in figure 1. Each tool section comprises several ground tools 4 of different kind.

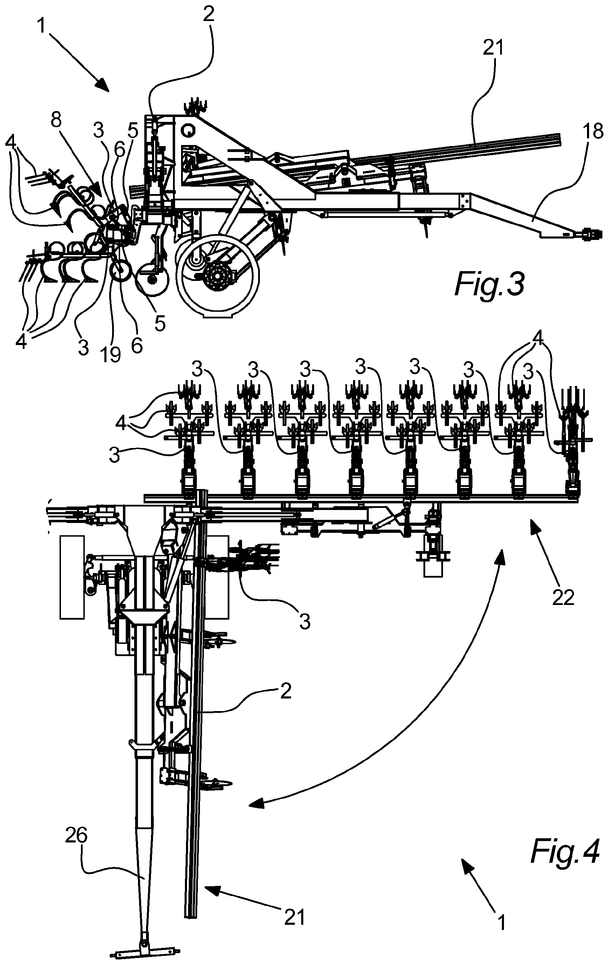

Now, in inter-row cultivator 1 according to an embodiment of the invention is illustrated in a side view on figure 3. Two different tool sections 3 can be seen, each suspended by an individually controlled suspension arrangement 8. One tool section 3 is in a raised position 24 while another tool section 3 is in a lowered or ground-engaging position 23. The suspension arrangement 8 comprises an upper pivot link 5 and a lower pivot link 6 each being connected to the tool bar 2 at a first pivotal joint and each being connected to the tool section 3 at a second pivotal joint. The tool sections 3 each comprise a number of different ground tools 4 for cultivating and processing the ground and a wheel 19 for engaging the ground during operation of the inter-row cultivator 1. Finally, the inter-row cultivator comprises a hinge arrangement 26 for connecting to a pulling vehicle, such as a tractor. In the present embodiment, the lower pivot link 6 comprises an actuator arrangement 9, namely a linear actuator, such as a cylinder and piston. This actuator arrangement 9 may increase its length and thereby cause the tool section 3 to move to the raised position 24.

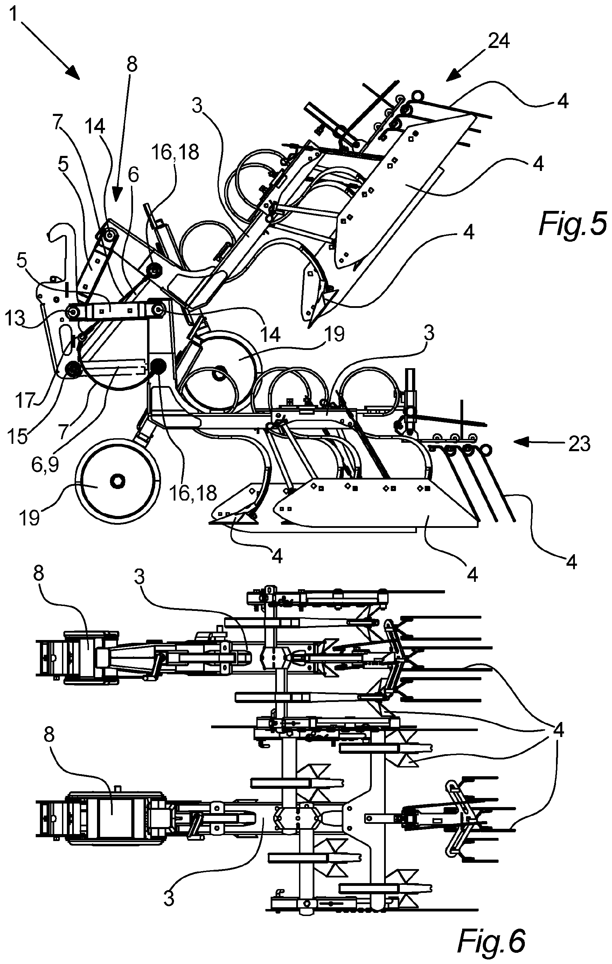

Now turning to figure 4, an inter-row cultivator 1 according to a further embodiment is illustrated. Again a number of tool sections 3 comprising ground tools 4 are suspended on a tool bar 2 by individual suspension arrangements 8. Now, the tool bar 2 is illustrated both in an inactive position 21 and in an active position 22. The tool bar 2 in the inactive position 21 on figure 4 is shown with only one tool section 3. However, in the present context it should be understood that of course a fully equipped tool bar 2 as the one seen in the active position 22 may be moved to the same inactive position 21 similarly. The inactive position 21 is used e.g. during transportation and/or storage of the inter-row cultivator 1. For example, when the inter-row cultivator 1 has moved to the field, it is made ready for operation by moving the tool bar 2 to an active position 22. Similarly, after field operation the tool bar 2 is moved to the inactive position 21 before transportation. The individual tool sections 3 may move between two positions, namely a ground-engaging position 23 and a raised position 24, these positions being illustrated e.g. on figure 5. According to the present embodiment, the tool section 3 turns approximately 60° degrees from the ground-engaging position 23 to the raised position 24. Furthermore, when the tool bar 2 moves from the active position 22 to the inactive position 21, it turns approximately 30° about its own axis, such that the tool sections 3 turn another 30°, thereby completing a total turn of the tool sections 3 of approximately 90°. By the tool bar 2 performing this extra turn about its own axis, the tool sections 3 are turned into a more position taking up less space, i.e. the width of the inter-row cultivator 1 is minimized for transportation.

Now referring to figure 5, an embodiment of the invention is illustrated. On figure 5, a part of the tool bar 2 can be seen. Also, tool sections 3 are individually suspended on the tool bar 2 by each their suspension arrangement 8. The suspension arrangements 8 each comprises an upper pivot link 5, a lower pivot link 6, and a guiding pivot link 7. The upper pivot link 5 is pivotally connected to the tool bar 2 at a first upper pivotal joint 13, and pivotally connected to the tool section at a second upper pivotal joint 14. The lower pivot link 6 is connected to the tool bar 2 at a first lower pivotal joint 15 and pivotally connected to the tool section 3 at a second lower pivotal joint 16. Finally, the guiding pivot link 7, which is formed by a wire in this embodiment, is connected to the tool bar 2 at a first guiding link pivotal joint 17 and connected to the tool section 3 at a second guiding link pivotal joint 18. In the present embodiment, the second lower pivotal joint 16 and the second guiding link pivotal joint 18 is the same pivotal joint. On figure 5, one tool section 6 can be seen in a ground-engaging position 23 in front, and another tool section 6 can be seen behind in a raised position 24. On the suspension arrangement 8 of the tool section 3 in the ground-engaging position 23, the wire of the guiding pivot link 7 is bent. Also, the lower pivotal joint 6, which in this embodiment is formed by a cylinder 25 and a piston 20, is in a configuration with equal length as the upper pivotal joint 5. When actuator arrangement 9 of the lower pivotal joint 6 increases the length of the lower pivotal joint 6, the wire of the guiding pivot link 7 is straightened from a bent form into a straight form. Then, the wire will then force the tool section 3 to move and turn upwards as the actuator arrangement 9 still gradually increases its length, thereby causing the tool section 3 to move to the raised position 24.

Now, referring to figure 6 a part of an inter-row cultivator 1 according to an embodiment of the invention is illustrated. Two tool sections 3 are seen in a top-down view. The tool sections 3 comprises ground tools 4 and are each suspended by an individual suspension arrangement 8, the suspension arrangements 8 each being connected to the tool bar 2.

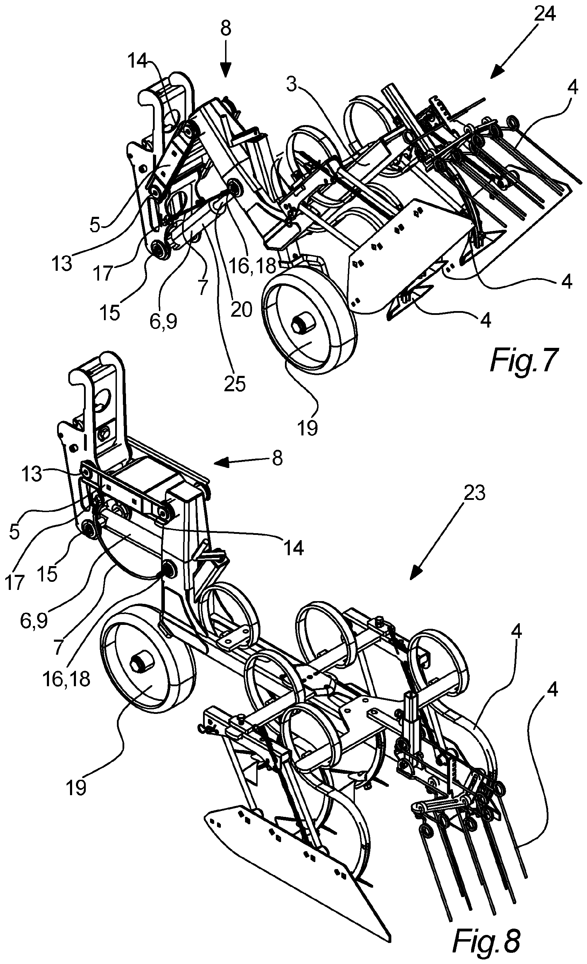

Now, referring to figures 7 and 8, a tool section 3 is shown in a perspective view. On figure 7, the tool section 3 is seen in a raised position 24, while on figure 8, the tool section 3 is in a ground-engaging position 23. Similar to figure 6, the wire of the guiding tool section 7 is bent when the tool section 3 is in the ground-engaging position 23. When the actuator arrangement 9 increases its length, the wire is straightened, and the tool section 3 forced upwards into the raised position 24 by the straightened wire of the guiding pivot link 7. Also, the tool sections on figures 7 and 8 also comprise a wheel 19. The wheel 19 will during operation of the inter-row cultivator 1, where the tool section 3 is typically in the ground-engaging position 23, be in contact with the ground and will move up and down with the ground level as the inter-row cultivator 1 moves forward. This is possible due to the mainly vertical flexibility induced by the upper and lower pivot joints 5, 6, due to their pivotal connections to the tool bar 2 and the tool section 3.

### Figure references

- 1.: Inter-row cultivator
- 2.: Tool bar
- 3.: Tool section
- 4.: Ground tool
- 5.: Upper pivot link
- 6.: Lower pivot link
- 7.: Guiding pivot link
- 8.: Suspension arrangement
- 9.: Actuator arrangement
- 10.: Hitch arrangement
- 11.: Common pivot point
- 12.: Control arrangement
- 13.: First upper pivotal joint
- 14.: Second upper pivotal joint
- 15.: First lower pivotal joint
- 16.: Second lower pivotal joint
- 17.: First guiding link pivotal joint
- 18.: Second guiding link pivotal joint
- 19.: Wheel
- 20.: Piston
- 21.: Inactive position
- 22.: Active position
- 23.: Ground-engaging position
- 24.: Raised position
- 25.: Cylinder
- 26.: Hinge arrangement

## Claims

1. An inter-row cultivator (1) comprising
at least one tool bar (2) and
a two or more of tool sections (3) each being suspended on said at least one tool bar (2) by an individual suspension arrangement (8),
each tool section (3) comprising one or more ground tools (4),
the suspension arrangement (8) comprising
an upper pivot link (5) being pivotally connected to the tool bar (2) at a first upper pivotal joint (13) and pivotally connected to the tool section (3) at a second upper pivotal joint (14) and
a lower pivot link (6) being pivotally connected to the tool bar (2) at a first lower pivotal joint (15) and pivotally connected to the tool section (3) at a second lower pivotal joint (16),
wherein one of said upper and said lower pivot links (5, 6) comprises an actuator arrangement (9) for changing the distance between said first pivotal joint (13, 15) and said second pivotal joint (14, 16) of said pivotal link (5, 6) comprising said actuator arrangement (9).

2. An inter-row cultivator (1) according to claim 1,
wherein each of the suspension arrangements (8) furthermore comprises a guiding pivot link (7) being pivotally connected to the tool bar (2) at a first guiding link pivotal joint (17) and pivotally connected to the tool section (3) at a second guiding link pivotal joint (18).

3. An inter-row cultivator according to claims 2,
wherein the guiding pivot link (7) is formed by a wire, such as a steel wire.

4. An inter-row cultivator (1) according to any of claims 2-3,
wherein the guiding pivot link (7) is non-parallel to the lower pivot link (6) when the tool section (3) is in a raised position (24).

5. An inter-row cultivator (1) according to claim 4,
wherein the guiding pivot link (7) is orientated with an angle relative to the lower pivot link (6), said angle being between 2° and 45°, such as between 4° and 30°, such as between 6° and 15°, such as between 7° and 10°.

6. An inter-row cultivator (1) according to any of claims 2-5,
wherein the length of said guiding pivot link (7) is greater than the length of the upper and lower pivot links (5, 6).

7. An inter-row cultivator (1) according to any of the preceding claims,
wherein the tool bar (2) comprises a control arrangement (12) for controlling the actuator arrangements (9) individually.

8. An inter-row cultivator (1) according to any of the preceding claims,
wherein said upper and lower pivot links (5, 6) are parallel when the tool section (3) is in a ground-engaging position (23).

9. An inter-row cultivator (1) according to any of the preceding claims,
wherein said upper pivotal link (5) has the same length as said lower pivot link (6) when said tool section (3) are in a ground engaging position (23).

10. An inter-row cultivator (1) according to any of the preceding claims,
wherein the lower pivot link (6) comprises said actuator arrangement (9).

## Patentansprüche

1. Zwischenreihenkultivator (1), der umfasst:
- wenigstens einen Geräteträger (2) und
- zwei oder mehr Geräteabschnitte (3), die jeweils durch eine einzelne Aufhängungsanordnung (8) an dem wenigstens einen Geräteträger (2) aufgehängt sind,
- wobei jeder Geräteabschnitt (3) ein oder mehrere Bodengeräte (4) umfasst,
- wobei die Aufhängungsanordnung (8) umfasst:
- eine obere Schwenkverbindung (5), die an einem ersten oberen Drehgelenk (13) schwenkbar mit dem Geräteträger (2) und an einem zweiten oberen Drehgelenk (14) schwenkbar mit dem Geräteabschnitt (3) verbunden ist,
und
- eine untere Schwenkverbindung (6), die an einem ersten unteren Drehgelenk (15) schwenkbar mit dem Geräteträger (2) und an einem zweiten unteren Drehgelenk (16) schwenkbar mit dem Geräteabschnitt (3) verbunden ist,
- wobei die obere oder untere Schwenkverbindung (5, 6) eine Aktoranordnung (9) zum Ändern des Abstands zwischen dem ersten Drehgelenk (13, 15) und dem zweiten Drehgelenk (14, 16) der die Aktoranordnung (9) umfassenden Schwenkverbindung (5, 6) umfasst.

2. Zwischenreihenkultivator (1) nach Anspruch 1,
wobei jede der Aufhängungsanordnungen (8) ferner eine Führungsschwenkverbindung (7) umfasst, die an einem ersten Führungsverbindungsdrehgelenk (17) schwenkbar mit dem Geräteträger (2) und an einem zweiten Führungsverbindungsdrehgelenk (18) schwenkbar mit dem Geräteabschnitt (3) verbunden ist.

3. Zwischenreihenkultivator nach Anspruch 2,
wobei die Führungsschwenkverbindung (7) durch einen Draht, wie etwa einen Stahldraht, gebildet wird.

4. Zwischenreihenkultivator (1) nach einem der Ansprüche 2 bis 3,
wobei die Führungsschwenkverbindung (7) nicht parallel zur unteren Schwenkverbindung (6) ist, wenn sich der Geräteabschnitt (3) in einer angehobenen Position (24) befindet.

5. Zwischenreihenkultivator (1) nach Anspruch 4,
wobei die Führungsschwenkverbindung (7) relativ zur unteren Schwenkverbindung (6) in einem Winkel ausgerichtet ist, wobei der Winkel zwischen 2° und 45° beträgt, etwa zwischen 4° und 30°, etwa zwischen 6° und 15° und etwa zwischen 7° und 10°.

6. Zwischenreihenkultivator (1) nach einem der Ansprüche 2 bis 5,
wobei die Länge der Führungsschwenkverbindung (7) größer als die Länge der oberen und unteren Schwenkverbindung (5, 6) ist.

7. Zwischenreihenkultivator (1) nach einem der vorhergehenden Ansprüche,
wobei der Geräteträger (2) eine Steueranordnung (12) zum einzelnen Steuern der Aktoranordnungen (9) umfasst.

8. Zwischenreihenkultivator (1) nach einem der vorhergehenden Ansprüche, wobei die obere und untere Schwenkverbindung (5, 6) parallel sind, wenn sich der Geräteabschnitt (3) in einer mit dem Boden in Eingriff stehenden Position (23) befindet.

9. Zwischenreihenkultivator (1) nach einem der vorhergehenden Ansprüche, wobei die obere Schwenkverbindung (5) die gleiche Länge wie die untere Schwenkverbindung (6) hat, wenn sich der Geräteabschnitt (3) in einer mit dem Boden in Eingriff stehenden Position (23) befindet.

10. Zwischenreihenkultivator (1) nach einem der vorhergehenden Ansprüche, wobei die untere Schwenkverbindung (6) die Aktoranordnung (9) umfasst.

## Revendications

1. Dispositif de culture entre rangées (1) comprenant
au moins une barre d'outils (2) et
deux ou plus de sections d'outils (3) chacune étant suspendues sur ladite au moins une barre d'outils (2) par un agencement de suspension individuel (8),
chaque section d'outils (3) comprenant un ou plusieurs outils de sol (4), l'agencement de suspension (8) comprenant
un lien pivotant supérieur (5) étant relié de manière pivotante à la barre d'outils (2) au niveau d'un premier joint pivotant supérieur (13) et relié de manière pivotante à la section d'outils (3) au niveau d'un second joint pivotant supérieur (14) et
un lien pivotant inférieur (6) étant relié de manière pivotante à la barre d'outils (2) au niveau d'un premier joint pivotant inférieur (15) et relié de manière pivotante à la section d'outils (3) au niveau d'un second joint pivotant inférieur (16),
dans lequel un desdits liens pivotants supérieur et inférieur (5, 6) comprend un agencement actionneur (9) pour changer la distance entre ledit premier joint pivotant (13, 15) et ledit second joint pivotant (14, 16) dudit lien pivotant (5, 6) comprenant ledit agencement actionneur (9).

2. Dispositif de culture entre rangées (1) selon la revendication 1,
dans lequel chacun des agencements de suspension (8) comprend de plus un lien pivotant de guidage (7) étant relié de manière pivotante à la barre d'outils (2) au niveau d'un premier joint pivotant de lien de guidage (17) et relié de manière pivotante à la section d'outils (3) au niveau d'un second joint pivotant de lien de guidage (18).

3. Dispositif de culture entre rangées (1) selon la revendication 2,
dans lequel le lien pivotant de guidage (7) est formé par un fil, tel qu'un fil d'acier.

4. Dispositif de culture entre rangées (1) selon l'une quelconque des revendications 2 à 3,
dans lequel le lien pivotant de guidage (7) est non parallèle au lien pivotant inférieur (6) lorsque la section d'outils (3) est dans une position relevée (24).

5. Dispositif de culture entre rangées (1) selon la revendication 4,
dans lequel le lien pivotant de guidage (7) est orienté avec un angle par rapport au lien pivotant inférieur (6), ledit angle étant entre 2° et 45°, tel qu'entre 4° et 30°, tel qu'entre 6° et 15°, tel qu'entre 7° et 10°.

6. Dispositif de culture entre rangées (1) selon l'une quelconque des revendications 2 à 5,
dans lequel la longueur dudit lien pivotant de guidage (7) est supérieure à la longueur des liens pivotants supérieur et inférieur (5, 6).

7. Dispositif de culture entre rangées (1) selon l'une quelconque des revendications précédentes,
dans lequel la barre d'outils (2) comprend un agencement de contrôle (12) pour le contrôle des agencements actionneurs (9) individuellement.

8. Dispositif de culture entre rangées (1) selon l'une quelconque des revendications précédentes,
dans lequel lesdits liens pivotants supérieur et inférieur (5, 6) sont parallèles lorsque la section d'outils (3) est dans une position d'engagement dans le sol (23).

9. Dispositif de culture entre rangées (1) selon l'une quelconque des revendications précédentes,
dans lequel ledit lien pivotant supérieur (5) a la même longueur que ledit lien pivotant inférieur (6) lorsque ladite section d'outils (3) est dans une position d'engagement dans le sol (23).

10. Dispositif de culture entre rangées (1) selon l'une quelconque des revendications précédentes,
dans lequel le lien pivotant inférieur (6) comprend ledit agencement actionneur (9).
